# EUROPÄISCHE PATENTSCHRIFT

(11) **EP 2 363 187 B1**
(45) Veröffentlichungstag und Bekanntmachung des Hinweises auf die Patenterteilung: **17.02.2016**
(21) Anmeldenummer: 11001804.1
(22) Anmeldetag: 04.03.2011
(51) Int. Cl.: B01D 29/11, E05F 3/10

(54) **Ringfilter mit einer verbesserten Dichtung**
Ring filter in space saving design
Filtre annulaire compact

(30) Priorität: 05.03.2010 DE 102010010544
(43) Veröffentlichungstag der Anmeldung: 07.09.2011
(73) Patentinhaber: DORMA Deutschland GmbH, 58256 Ennepetal (DE)
(72) Erfinder: Wildförster, Thomas, 58332 Schwelm (DE)
(74) Vertreter: Balder IP Law, S.L.

(56) Entgegenhaltungen:
- EP-A1- 1 621 240
- EP-A1- 1 623 747
- EP-A2- 2 186 982
- WO-A1-2007/081230
- DE-A1- 1 933 213

## Beschreibung

Die vorliegende Erfindung betrifft einen Ringfilter, der sich ringförmig um eine Mittelachse erstreckt und zur Anordnung in einer bohrungsartigen Aufnahme ausgebildet ist. Der Ringfilter weist einen Filterkorb auf, der die Struktur des Ringfilters bildet und sich ringförmig um die Mittelachse erstreckt, wobei ein Filtermaterial vorgesehen ist, das im Filterkorb aufgenommen ist und das zur Filterung eines das Filtermaterial durchströmenden Mediums dient.

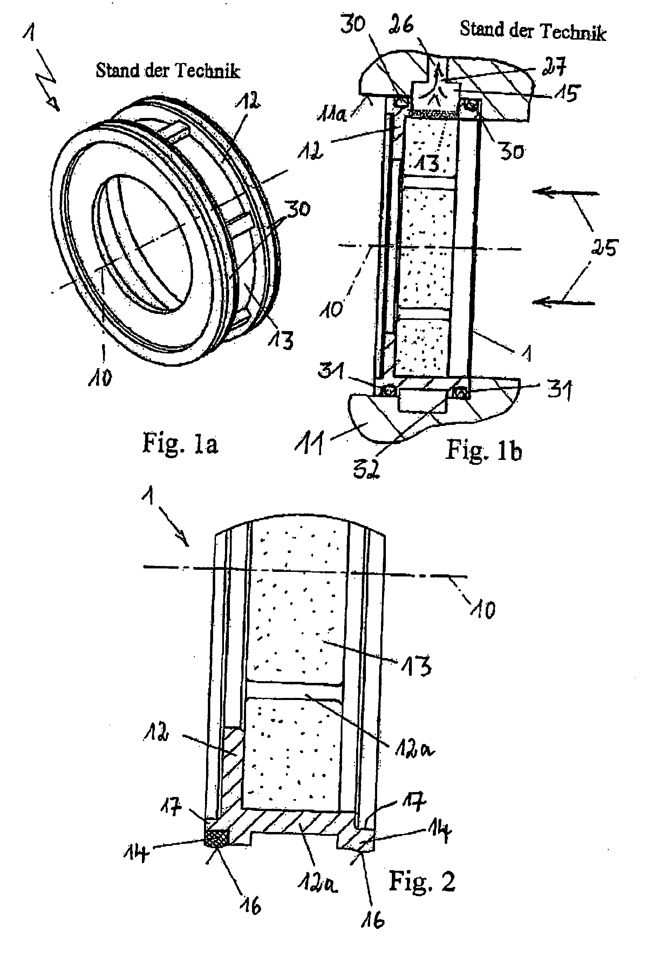

Ringfilter der hier interessierenden Art sind aus dem Stand der Technik bereits bekannt. Die Figuren 1 a und 1 b zeigen einen Ringfilter 1 gemäß dem Stand der Technik. Der Ringfilter 1 ist in einer bohrungsartigen Aufnahme 11 eingesetzt und weist eine Grundstruktur auf, die durch einen Filterkorb 12 gebildet ist. Der Filterkorb 12 erstreckt sich ringförmig um eine Mittelachse 10. In der gezeigten Einbausituation des Ringfilters 1 ist beispielhaft eine radiale Anströmrichtung 25 gezeigt, aus der der Ringfilter 1 mit einem Medium angeströmt wird. Die Abströmrichtung 26 verläuft radial in Richtung eines Abströmkanals 27. Auf dem Umfang des Ringfilters 1 kann der Abströmkanal 27 ein- oder mehrfach vorhanden sein, wobei sich der wenigstens eine Abströmkanal 27 an einen den Ringfilter 1 ringförmig umschließenden Fluidbereich 15 anschließen kann.

Der Aufbau des Ringfilters 1 zeigt einen Filterkorb 12, der im Wesentlichen formstabil ausgeführt ist. Im Filterkorb 12 ist ein Filtermaterial 13 aufgenommen, das vom Medium aus Richtung der Mittelachse 10 radial durchströmt wird, sodass sich das gefilterte Medium im Fluidbereich 15 sammeln kann und in Abströmrichtung 26 durch den Abströmkanal 27 abströmt.

Um den Ringfilter 1 in der Aufnahme 11 abzudichten, sind links- und rechtsseitig des Fluidbereiches 15 O-Ringe 30 in Aufnahmenuten 31 aufgenommen, die außenseitig umlaufend im Filterkorb 12 eingebracht sind. Damit wird vermieden, dass das zu filternde Medium zwischen dem Filterkorb 12 und der Aufnahme 11 entlang strömen kann und vom Anströmbereich in den Abströmkanal 27 gelangen kann.

Sind die Dichtelemente in Gestalt von O-Ringen 30 ausgestaltet, so ergeben sich Nachteile bei der Montage des Ringfilters 1 in der Aufnahme 11. Der Ringfilter 1 muss aus Richtung der Öffnung in die Aufnahme 11 eingeschoben werden. Die Schieberichtung erfolgt dabei entlang der Mittelachse 10. Dabei müssen die O-Ringe 30 zuvor in den Aufnahmenuten 31 angeordnet werden, wobei die O-Ringe 30 einen Schnurdurchmesser aufweisen können, der geringfügig großer ist als die Tiefe der Aufnahmenuten 31. Folglich ragen die O-Ringe 30 geringfügig aus dem Umfang des Filterkorbes 12 hervor. Wird der Filterkorb 12 entlang der Wandung 11a der Aufnahme 11 in diese eingeschoben, kann es zu Quetschungen des Materials der O-Ringe 30 an Kantenbereichen 32 in der Aufnahme 11 kommen. Dadurch können die O-Ringe 30 beschädigt werden, und die Dichtwirkung kann verloren gehen. Ferner können abgescherte Materialpartikel der O-Ringe 30 in das zu filternde Medium gelangen und Folgeschäden im System hervorrufen, in dem der Ringfilter 1 Verwendung findet.

Das Dokument EP 1 621 240 A1 offenbart einen Ringfilter, welcher einen Filterabschnitt und Rahmnelemente aufweist.

Es ist daher die Aufgabe der vorliegenden Erfindung, einen Ringfilter zu schaffen, der die Nachteile des vorstehend beschriebenen Standes der Technik überwindet und eine verbesserte Dichtanordnung zur Abdichtung des Ringfilters in einer Aufnahme aufweist.

Diese Aufgabe wird ausgehend von einem Ringfilter gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass der Filterkorb wenigstens einen einteilig mit dem Filterkorb ausgebildeten Dichtkörper aufweist, der zur Dichtung wenigstens eines Fluidbereiches des Filterkorbes gegen die Aufnahme ausgebildet ist, wobei der Dichtkörper eine radial nach außen gewölbte Dichtschulter bilden, um gegen die Wandung der Aufnahme dichtend zur Anlage zu gelangen.

Durch die erfindungsgemäße Ausbildung eines Dichtkörpers am Filterkorb wird der Vorteil erreicht, dass der Dichtkörper bei Einsetzen des Ringfilters in eine Aufnahme nicht beschädigt wird. Der Dichtkörper ist damit nicht als Einzelteil ausgeführt, wie bei Verwendung eines Dichtkörpers in Gestalt eines O-Ringes. Folglich kommt es nicht zu einer losen Anordnung eines Dichtelementes am Ringfilter, da der Dichtkörper durch einen Bereich des Filterkorbes selbst gebildet ist. Wird der Filterkorb in die Aufnahme eingesetzt, kann zwar bereichsweise eine Deformation des Dichtkörpers stattfinden, ein Abscheren eines Materialbereiches des O-Ringes in einem Kantenbereich der Aufnahme kann jedoch nicht erfolgen. Im Ergebnis wird erreicht, dass der Ringfilter mit einer erfindungsgemäßen Anordnung eines Dichtkörpers als Bereich im Filterkorb beschädigungsfrei montierbar ist. Die Dichtschulter ragt damit in radialer Richtung leicht über den übrigen Außenumfang des Filterkorbes hinaus. Am Filterkorb können zwei Dichtschultern vorgesehen sein, die angrenzend an die seitlichen Begrenzungen des Filterkorbes angeordnet sind. Ist der Dichtkörper materialeinheitlich und einteilig mit dem Filterkorb ausgeführt, so weist der Filterkorb selbst eine Außenkontur auf, die die Dichtschultern bildet. Ist der Dichtkörper aus einem anderen Material ausgebildet, als das Material des Filterkorbes, und sind die Dichtkörper vorzugsweise an den Filterkorb angespritzt und aus einem weicheren Material, beispielsweise aus einem Gummimaterial, ausgebildet. Somit können die Dichtschultern bei Montage des Ringfilters in der Aufnahme leicht elastisch nachgeben. Die elastische Verformung erfolgt dabei in Richtung zur Mittelachse.

Vorteilhafterweise ist der Filterkorb und der Dichtkörper in einem gemeinsamen Herstellungsschritt, insbesondere in einem gemeinsamen Spritzgussschritt hergestellt, sodass sowohl der Filterkorb als auch der Dichtkörper ein einheitliches Material aufweisen. Der Dichtkörper kann als Dichtgeometrie am Filterkorb selbst ausgeführt werden, sodass sowohl der Filterkorb als auch der Dichtkörper materialeinheitlich und einteilig miteinander ausgebildet sind. Der Werksstoff des Filterkorbes entspricht folglich dem Werkstoff des Dichtkörpers. Das Material des Filterkorbes geht unterbrechungsfrei in das Material des Dichtkörpers über.

Mit weiterem Vorteil kann der Filterkorb in einem ersten Spritzgussschritt hergestellt sein, wobei der wenigstens eine Dichtkörper in einem weiteren Spritzgussschritt an den Filterkorb angespritzt wird. Damit wird eine Alternative zur Ausbildung des Filterkorbes und des Dichtkörpers in einem gemeinsamen Spritzgussschritt aufgezeigt. Der Filterkorb kann als Einlegeteil in ein Spritzgusswerkzeug dienen, sodass das Material des oder der Dichtkörper in einem weiteren Spritzgussschritt an den Filterkorb angespritzt wird. Damit kann das Material des Dichtkörpers vom Material des Filterkorbes abweichen. Weist der Ringfilter zwei Dichtkörper auf, so besteht ferner die Möglichkeit, den ersten Dichtkörper in einem gemeinsamen Spritzgussschritt mit dem Filterkorb auszuführen, wobei wenigstens ein weiterer Dichtkörper in einem weiteren Spritzgussschritt an den Filterkorb angespritzt ist.

Der Filterkorb weist zumindest eine kragenartige Anformung auf, auf der die Dichtschulter zumindest teilweise angeordnet ist, wobei die kragenartige Anformung derart nachgiebig ausgeführt ist, dass diese radial nach innen einfederbar ist, wenn der Ringfilter in die Aufnahme eingefügt wird. Die kragenartige Anformung bewirkt eine Elastizität im Filterkorb im Bereich der Anordnung der Dichtschulter. Insbesondere dann, wenn der Dichtkörper materialgleich mit dem Filterkorb ausgeführt ist, ist eine radiale Nachgiebigkeit in Richtung zur Mittelachse von Vorteil. Dadurch kann ein dauerhafter Andruck der Dichtschulter gegen die Wandung der Aufnahme erzielt werden, um eine zuverlässige Dichtwirkung zu erhalten. Gemeinsam mit der kragenartigen Anformung bildet die Dichtschulter außenseitig am Filterkorb einen Dichtkranz, wobei die kragenartige Anformung mit dem Dichtkörper auch als gemeinsame Anformung an den Filterkorb ausgestaltet sein kann.

Nach einer weiteren vorteilhaften Ausführungsform des erfindungsgemäßen Ringfilters kann der Dichtkörper eine Ringnut aufweisen, sodass ein durch die Ringnut hinterschnittener Bereich eine Ringlippe bildet, die zur dichtenden Anlage gegen die Wandung der Aufnahme dient. Damit wird die Anordnung einer Lippendichtung gebildet, wobei die Ringlippe eine wenigstens in radiale Richtung des Ringfilters weisende Elastizität aufweist. Durch die gebildete Ringnut kann die Ringlippe in Richtung zum hinterschnittenden Bereich einfedern, wenn der Ringfilter in die Aufnahme eingesetzt wird. Die Ringlippe kann wiederum materialeinheitlich und einteilig mit dem Filterkorb ausgeführt sein, wobei bevorzugt das Material der Ringlippe vom Material des Filterkorbes abweicht. Insbesondere kann die Ringlippe an den Filterkorb angespritzt werden. Mit weiterem Vorteil kann die Ringlippe eine radial nach außen weisende Vorformung aufweisen. Damit ragt die Ringlippe über den Außenumfang des Filterkorbes hinaus. Wird der Ringfilter in die Aufnahme eingesetzt, kann die Ringlippe gegen die nach außen weisende Vorformung radial nach innen verformt werden, und die Ringlippe bildet mit dem Außenumfang des Filterkorbes einen zylinderartigen Körper mit gleich bleibendem Durchmesser.

Gemäß einer noch weiteren Ausführungsform des erfindungsgemäßen Ringfilters kann der wenigstens eine Dichtkörper einen radial nach außen weisenden Dichtkragen mit einer Montageschräge bilden, die eine derart gegen die Mittelachse geneigte Schrägung aufweist, dass ein Fügen des Ringfilters in der Aufnahme unterstützt ist. Durch die Montageschräge des Dichtkragens erhält der Ringfilter eine Montagerichtung, die vorgibt, mit welcher Seite der Ringfilter in eine Aufnahme eingeführt werden muss. Dabei wird der Ringfilter derart in die Aufnahme eingesetzt, dass die Seite des Dichtkragens mit dem geringeren Durchmesser der Montagerichtung voran läuft. Dabei kann der Dichtkragen mit der Seite des größeren Durchmessers größer sein als der Durchmesser der Aufnahme. Wird der Ringfilter in die Aufnahme eingesetzt, so wird der Dichtkragen leicht radial nach innen gequetscht. Dadurch entsteht eine verbesserte Dichtwirkung. Der Dichtkragen mit der Montageschräge kann beispielsweise derart bemessen sein, dass der Durchmesser der Aufnahme zwischen dem Durchmesser der kleinen Montageschrägenseite und dem Durchmesser der großen Montagenschrägenseite liegt.

Das Filtermaterial kann einen umfangsseitig des ringförmigen Filterkorbs angeordneten ersten und einen planseitig des Filterkorbes angeordneten zweiten Filtermaterialbereich aufweisen. Der Ringfilter kann beispielsweise aus Richtung der Mittelachse einseitig mit dem zu filternden Medium angeströmt werden, wobei das Medium einerseits radial, beispielsweise in einen Fluidbereich und einen sich daran anschließenden Abströmkanal, abströmen kann. Andererseits kann das Medium nach Durchtreten eines planseitig am Filterkorb vorhandenen Filtermaterials axial abströmen. Folglich kann der Ringfilter derart ausgebildet sein, dass sowohl eine radiale als auch eine axiale Abströmrichtung vorliegt. Die Aufnahme weist neben dem in der Aufnahme selbst vorhandenen Fluidbereich einen axialen Abströmbereich auf.

Der erste Filtermaterialbereich kann durch zumindest einen Dichtkörper vom zweiten Filtermaterialbereich fluidisch getrennt sein. Damit liegt ein Dichtkörper zwischen dem ersten Filtermaterialbereich, der den radial abströmenden Teil des Fluids filtert, und dem zweiten Filtermaterialbereich, der den axial abströmenden Teil des Fluids filtert.

Gemäß einer noch weiteren Ausführungsform des Ringfilters kann das Filtermaterial einen ersten und einen zweiten umfangsseitig im Filterkorb angeordneten Filtermaterialbereich aufweisen, sodass der Ringfilter als radial filternder Doppelfilter ausgeführt ist. Gemäß dieser Ausführungsform kann das zu filternde Medium den Ringfilter axial anströmen, wobei zwei fluidisch voneinander trennbare radiale Abströmbereiche vorliegen. Auch zwischen den beiden radial angeordneten Filtermaterialbereichen kann wenigstens ein Dichtkörper vorgesehen sein, um die Filtermaterialbereiche fluidisch voneinander zu trennen.

Der Ringfilter kann zum Einsatz in einem Türbetätiger zur Betätigung einer Tür ausgebildet sein, wobei insbesondere das das Filtermaterial durchströmende Medium die Hydraulikflüssigkeit eines hydraulisch wirkenden Türbetätigers ist. Dabei kann im Türbetätiger ein Kolben angeordnet sein, wobei die Aufnahme zur Anordnung des Ringfilters ein Gehäuse des Türbetätigers ist. Der Kolben ist damit im Gehäuse des Türbetätigers längs beweglich, wobei der Kolben vorzugsweise mit einer Schließerwelle des Türbetätigers wirkverbunden ist. Der Kolben durchläuft durch seine Längsbewegung einen Bewegungsraum im Gehäuse des Türbetätigers, wobei sich der Bewegungsraum des Kolbens wenigstens teilweise in den Ringfilter hinein erstrecken kann. Durch die ringförmige Ausbildung des Filters kann der offene Innenraum zugleich als Bewegungsraum des Kolbens genutzt werden. Insbesondere kann der Ringfilter in einem Druckraum des Türbetätigers angeordnet sein, der durch eine Fläche des Kolbens beweglich begrenzt ist. Führt der Kolben eine Längsbewegung aus, so drückt dieser bei Bewegung in Richtung zum Ringfilter das zu filternde Medium durch das Filtermaterial des Ringfilters hindurch. Die Abströmrichtung des zu filternden Mediums kann in radialer Richtung ausgebildet sein. Insbesondere kann der Fluidbereich als Ringraum ausgebildet sein, der sich zwischen zwei Dichtkörpern des Ringfilters erstreckt. Zusätzlich oder alternativ kann der Ringfilter einen Filtermaterialbereich aufweisen, der sich planseitig über dem Querschnitt des Ringfilters erstreckt. Wird der Kolben in Richtung zum Ringfilter bewegt, kann das zu filternde Medium vom Kolben durch die Planseite des Ringfilters hindurch gedrückt werden. Weitere, die Erfindung verbessernde Maßnahmen werden nachstehend gemeinsam mit der Beschreibung eines bevorzugten Ausführungsbeispiels der Erfindung anhand der Figuren näher dargestellt.

Es zeigen:
- Figur 1a und 1b:: eine perspektivische und eine quer geschnittene Ansicht eines Ringfilters mit O-Ring-Dichtungen gemäß dem Stand der Technik,
- Figur 2:: ein erstes Ausführungsbeispiel eines Ringfilters gemäß der vorliegenden Erfindung,
- Figur 3:: ein zweites Ausführungsbeispiel eines Ringfilters gemäß der vorliegenden Erfindung,
- Figur 4:: ein weiteres Ausführungsbeispiel eines Ringfilters gemäß der vorliegenden Erfindung,
- Figur 5:: eine perspektivische Darstellung eines Ringfilters mit getrennten Filtermaterialbereichen und
- Figur 6:: ein weiteres Ausführungsbeispiel eines Ringfilters mit getrennten Filtermaterialbereichen.

Die Figuren 1 a und 1 b zeigen einen Ringfilter 1 gemäß dem Stand der Technik, wie einleitend bereits beschrieben.

Figur 2 zeigt ein erstes mögliches Ausführungsbeispiel eines Ringfilters 1 gemäß der vorliegenden Erfindung. Der Ringfilter 1 erstreckt sich ringförmig um eine Mittelachse 10 und dient zur Anordnung in einer bohrungsartigen Aufnahme 11, wie in Figur 1 b gezeigt. Der Ringfilter 1 weist einen Filterkorb 12 auf, der die Grundstruktur des Ringfilters 1 bildet und sich ringförmig um die Mittelachse 10 erstreckt. Das Filtermaterial 13 dient zur Filterung eines das Filtermaterial 13 durchströmenden Mediums, und ist im Filterkorb 12 aufgenommen. Der Filterkorb 12 weist Stege 12a auf, die sich zwischen gegenüberliegenden Seitenbereichen des Filterkorbes 12 erstrecken und das Filtermaterial 13 stützen. Gemäß der Darstellung verläuft der Querschnitt durch einen Steg 12a.

Der Filterkorb 12 weist zwei Dichtkörper 14 auf, die zur Dichtung wenigstens eines Fluidbreiches 15 des Filterkorbes 12 gegen die Aufnahme 11 ausgebildet ist, siehe hierzu Figur 1 b. Die Dichtkörper 14 sind in Gestalt von Dichtschultern 16 ausgebildet, die sich bei Einbau des Ringfilters 1 in die Aufnahme 11 gegen die Wandung 11 a der Aufnahme 11 pressen lassen. Die Dichtschultern 16 überragen durch ihre Gestalt den Außendurchmesser des Filterkorbes 12 in radialer Richtung.

Der Filterkorb 12 weist für beide Anordnungen der Dichtkörper 14 jeweils eine kragenartige Anformung 17 auf. Auf der kragenartigen Anformung 17 ist die Dichtschulter 16 angeordnet, wobei die kragenartige Anformung 17 derart nachgiebig ausgebildet ist, dass diese radial nach innen einfederbar ist, wenn der Ringfilter 1 in die Aufnahme 11 eingeführt wird. Durch die kragenartige Anformung 17 mit einer elastischen Verformung in Richtung zur Mittelachse 10 wird bei einem dauerhaften Einsatz des Ringfilters 1 in einer Aufnahme 11 eine hinreichende Pressung der Dichtschulter 16 gegen die Wandung 11 a der Aufnahme 11 sicher gestellt.

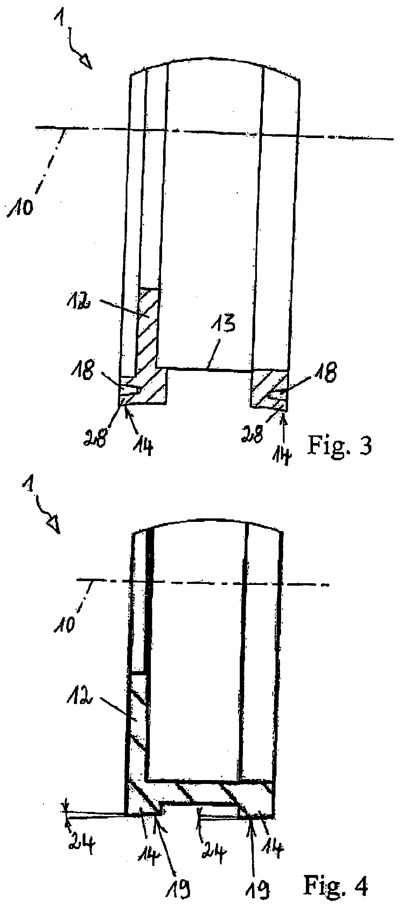

Figur 3 zeigt ein weiteres Ausführungsbeispiel eines Ringfilters 1 mit Dichtkörpern 14, die jeweils eine Ringnut 18 aufweisen. Die Ringnut 18 ist um die Mittelachse 10 umlaufend ausgebildet und weist die Form eines seitlichen Einstiches in den Bereich des Dichtkörpers 14 auf. Durch die Ausbildung der Ringnut 18 wird ein hinterschnittender Bereich gebildet, sodass eine Ringlippe 28 entsteht. Diese dient zur dichtenden Anlage gegen die Wandung 11a der Aufnahme 11. Insbesondere wird durch die umlaufende Ringnut 18 eine größere Nachgiebigkeit der Ringlippe 28 ermöglicht, sodass bei Einfederung der Ringlippe 28 der hinterschnittene Bereich verkleinert wird und sodass die Ringnut 18 als Rückfederraum der Ringlippe 28 dient. Gemäß der Darstellung ist der Dichtkörper 14 mit dem Material des Filterkorbes 12 einteilig und materialeinheitlich ausgebildet. Damit bildet der Dichtkörper 14 lediglich einen Materialbereich des Filterkorbes 12. Selbstverständlich kann auch gemäß diesem Ausführungsbeispiel der Dichtkörper 14 an eine entsprechend vorbereitete Geometrie im Filterkorb 12 angespritzt werden, sodass der Dichtkörper 14 mit der elastischen Ringlippe 28 aus einem anderen, vorzugsweise weicheren Material ausgebildet ist, als der Filterkorb 12.

Figur 4 zeigt ein noch weiteres Ausführungsbeispiel eines Ringfilters 1 gemäß der vorliegenden Erfindung. Der wenigstens eine Dichtkörper 14 weist einen radial nach außen weisenden Dichtkragen mit einer Montageschräge 19 auf, die eine derart gegen die Mittelachse 10 geneigte Schrägung 24 aufweist, sodass ein Fügen des Ringfilters 1 in der Aufnahme 11 unterstützt wird. Die Fügerichtung erfolgt entlang der Mittelachse 10, wobei die Schrägung 24 der Montageschrägen 19 derart ausgebildet ist, dass die Montage des Ringfilters 1 in einer Richtung von links nach rechts der Bildebene gemäß der Darstellung erfolgt.

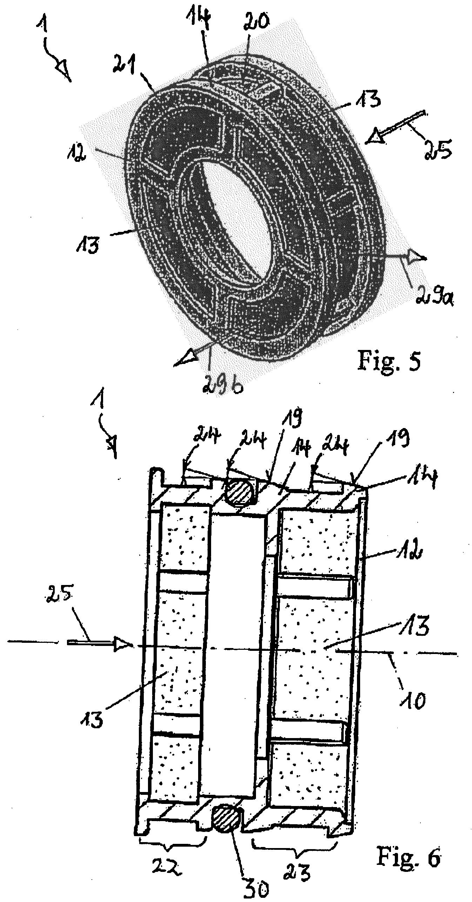

Figur 5 zeigt eine weitere perspektivische Ansicht des Ringfilters 1, der ein Filtermaterial 13 aufweist, das einen umfangsseitig des ringförmigen Filterkorbes 12 angeordneten ersten Filtermaterialbereich 20 und einen planseitig des Filterkorbes 12 angeordneten zweiten Filtermaterialbereich 21 aufweist. Das Filtermaterial 13 kann einteilig ausgeführt sein, und beispielsweise zur Herstellung des Ringfilters 1 in eine Spritzgussmaschine eingelegt werden. Wird anschließend der Filterkorb 12 gespritzt, kann dieser das Filtermaterial 13 derart umspritzen, dass der erste Filtermaterialbereich 20 und der zweite Filtermaterialbereich 21 gebildet wird. Wird der Ringfilter 21 gemäß der gezeigten Anströmrichtung 25 mit einem Medium angeströmt, kann dieses Medium entweder durch den ersten Filtermaterialbereich 20 oder durch den zweiten Filtermaterialbereich 21 radial oder axial wieder abströmen. Die Filtermaterialbereiche 20 und 21 können ferner durch einen Dichtkörper 14 gemäß der vorgezeigten Ausführungen fluidisch voneinander getrennt sein. Die radiale Abströmrichtung ist mit 29a beziffert, wobei die axiale Abströmrichtung mit 29b angezeigt ist.

Figur 6 zeigt ein weiteres Ausführungsbeispiel eines Ringfilters 1 gemäß der vorliegenden Erfindung, wobei die Dichtkörper 14 beispielhaft der Ausführung gemäß Figur 4 entsprechen. Die Dichtkörper 14 sind 3-fach am Ringfilter 1 vorhanden, und weisen einen nach außen weisenden Dichtkragen mit einer Montageschräge 19 auf, die eine derart gegen die Mittelachse 10 geneigte Schrägung 24 besitzen, dass ein Fügen des Ringfilters 1 in der Aufnahme 11 unterstützt ist. Der gezeigte Ringfilter 1 besitzt zwei Filtermaterialbereiche 22 und 23, die beide ein radial abströmendes Medium filtern. Dieses kann gemäß der Anströmrichtung 25 axial dem Ringfilter 1 zugeführt werden, und das Medium durchströmt das Filtermaterial 13 in radialer Richtung und kann auch in radialer Richtung abfließen.

Die Filtermaterialbereiche 22 und 23 sind beispielhaft durch einen O-Ring 30 auf konventionelle Weise voneinander getrennt, wobei die Anordnung des O-Ringes 30 zwischen zwei Dichtkörpern 14 gemäß der vorliegenden Erfindung angeordnet ist. Der Filterkorb 12 ist einteilig ausgeführt, und bildet beide Filtermaterialbereiche 22 und 23 durch entsprechende Aufnahme beider Filtermaterialien 13. Weitere Ausführungsformen werden gebildet, wenn angrenzend an die gezeigten Filtermaterialbereiche 22 und 23 noch weitere Filtermaterialbereiche folgen, sodass sich der Ringfilter 1 in Richtung zur Mittelachse 10 weiter verbreitert und mehrere fluidisch voneinander getrennte radiale Abströmbereiche gebildet sind.

### Bezugszeichenliste

- 1: Ringfilter
- 10: Mittelachse
- 11: Aufnahme
- 11a: Wandung der Aufnahme
- 12: Filterkorb
- 12a: Steg
- 13: Filtermaterial
- 14: Dichtkörper
- 15: Fluidbereich
- 16: Dichtschulter
- 17: kragenartige Anformung
- 18: Ringnut
- 19: Montageschräge
- 20: erster Filtermaterialbereich
- 21: zweiter Filtermaterialbereich
- 22: erster Filtermaterialbereich
- 23: zweiter Filtermaterialbereich
- 24: Schrägung
- 25: Anströmrichtung
- 26: Abströmrichtung
- 27: Abströmkanal
- 28: Ringlippe
- 29a: radiale Abströmrichtung
- 29b: axiale Abströmrichtung
- 30: O-Ring
- 31: Aufnahmenut
- 32: Kantenbereich

## Patentansprüche

1. Ringfilter (1), der sich um eine Mittelachse (10) ringförmig erstreckt und zur Anordnung in einer bohrungsartigen Aufnahme (11) ausgebildet ist, aufweisend:
einen Filterkorb (12), der die Grundstruktur des Ringfilters (1) bildet und sich ringförmig um die Mittelachse (10) erstreckt,
ein Filtermaterial (13), das im Filterkorb (12) aufgenommen ist und das zur Filterung eines das Filtermaterial (13) durchströmenden Mediums dient,
wobei der Filterkorb (12) wenigstens einen einteilig mit dem Filterkorb (12) ausgebildeten Dichtkörper (14) aufweist, der zur Dichtung wenigstens eines Fluidbereiches (15) des Filterkorbes (12) gegen die Aufnahme (11) ausgebildet ist, wobei der Dichtkörper (14) eine radial nach außen gewölbte Dichtschulter (16) bildet, um gegen die Wandung (11a) der Aufnahme (11) dichtend zur Anlage zu gelangen, **dadurch gekennzeichnet, dass** der Filterkorb (12) zumindest eine kragenartige Anformung (17) aufweist, auf der die Dichtschulter (16) zumindest teilweise angeordnet ist, wobei die kragenartige Anformung (17) derart nachgiebig ausgebildet ist, dass diese radial nach innen einfederbar ist, wenn der Ringfilter (1) in die Aufnahme (11) eingefügt wird.

2. Ringfilter (1) nach Anspruch 1, **dadurch gekennzeichnet, dass** der Filterkorb (12) und der Dichtkörper (14) in einem gemeinsamen Herstellungsschritt, insbesondere in einem gemeinsamen Spritzgussschritt hergestellt sind und ein einheitliches Material aufweisen.

3. Ringfilter (1) nach Anspruch 1, **dadurch gekennzeichnet, dass** der Filterkorb (12) in einem ersten Spritzgussschritt hergestellt ist und wobei der wenigstens eine Dichtkörper (14) in einem weiteren Spritzgussschritt an den Filterkorb (12) angespritzt ist.

4. Ringfilter (1) nach einem der vorgenannten Ansprüche, **dadurch gekennzeichnet, dass** der Dichtkörper (14) eine Ringnut (18) aufweist, sodass ein durch die Ringnut (18) hinterschnittener Bereich eine Ringlippe (28) bildet, die zur dichtenden Anlage gegen die Wandung (11a) der Aufnahme (11) dient.

5. Ringfilter (1) nach Anspruch 5, **dadurch gekennzeichnet, dass** die Ringlippe (19) eine radial nach außen weisende Vorformung aufweist.

6. Ringfilter (1) nach einem der vorgenannten Ansprüche, **dadurch gekennzeichnet, dass** der wenigstens eine Dichtkörper (14) einen radial nach außen weisenden Dichtkragen mit einer Montageschräge (19) bildet, die eine derart gegen die Mittelachse (10) geneigte Schrägung (24) aufweist, dass ein Fügen des Ringfilters (1) in der Aufnahme (11) unterstützt ist.

7. Ringfilter (1) nach einem der vorgenannten Ansprüche, **dadurch gekennzeichnet, dass** das Filtermaterial (13) einen umfangsseitig des ringförmigen Filterkorbes (12) angeordneten ersten (20) und einen planseitig des Filterkorbes (12) angeordneten zweiten Filtermaterialbereich (21) aufweist.

8. Ringfilter (1) nach Anspruch 8, **dadurch gekennzeichnet, dass** der erste Filtermaterialbereich (20) durch einen Dichtkörper (14) vom zweiten Filtermaterialbereich (21) fluidisch getrennt ist.

9. Ringfilter (1) nach einem der vorgenannten Ansprüche, **dadurch gekennzeichnet, dass** das Filtermaterial (13) einen ersten (22) und einen zweiten (23) umfangsseitig im Filterkorb (12) angeordneten Filtermaterialbereich aufweist, sodass der Ringfilter (1) als Doppelfilter ausgeführt ist.

10. Ringfilter (1) nach Anspruch 10, **dadurch gekennzeichnet, dass** zwischen den Filtermaterialbereichen (22, 23) wenigstens ein Dichtkörper (14) vorgesehen ist, um die Filtermaterialbereiche (22) fluidisch voneinander zu trennen.

## Claims

1. A ringfilter (1), which extends in a ring-shape about a central axis (10) and is configured for the disposition in a bore-like reception (11), including:
a filter basket (12), which forms the basic structure of the ringfilter (1) and extends in a ring-shape about the central axis (10),
filter material (13), which is accommodated in the filter basket (12) and serves for filtering a medium, which flows through the filter material (13),
wherein the filter basket (12) includes at least one sealing body (14), which is integrally configured with the filter basket (12) and is configured for sealing at least one fluid area (15) of the filter basket (12) towards the reception (11), wherein the sealing body (14) forms a sealing shoulder (16) radially arched towards the outside for reaching a sealing abutment against the walling (11 a) of the reception (11), **characterized in that** the filter basket (12) includes at least one collar-like conformation (17), on which the sealing shoulder (16) is at least partially disposed, wherein the collar-like conformation (17) is resiliently configured in such a way that the latter is configured to radially deflect inwardly, when the ringfilter (1) is inserted into the reception (11).

2. The ringfilter (1) according to claim 1, **characterized in that** the filter basket (12) and the sealing body (14) are manufactured in a common manufacturing step, in particular in a common injection moulding step and have a uniform material.

3. The ringfilter (1) according to claim 1, **characterized in that** the filter basket (12) is manufactured in a first injection moulding step and wherein the at least one sealing body (14) is injected onto the filter basket (12) in a further injection moulding step.

4. The ringfilter (1) according to any of the previously mentioned claims, **characterized in that** the sealing body (14) includes an annular groove (18) such that an area undercut by the annular groove (18) forms an annular lip (28), which serves for the sealing abutment against the walling (11 a) of the reception (11).

5. The ringfilter (1) according to claim 5, **characterized in that** the annular lip (19) includes a deformation pointing radially to the outside.

6. The ringfilter (1) according to any of the previously mentioned claims, **characterized in that** the at least one sealing body (14) forms a sealing collar radially pointing to the outside with a mounting slant (19), which includes a slant (24) inclined towards the central axis (10) in a way such as to assist joining the ringfilter (1) in the reception (11).

7. The ringfilter (1) according to any of the previously mentioned claims, **characterized in that** the filter material (13) includes a first filter material area (20), which is disposed circumferentially of the ring-shaped filter basket (12), and a second filter material area (21), which is disposed on the planar side of the filter basket (12).

8. The ringfilter (1) according to claim 8, **characterized in that** the first filter material area (20) is fluidically separated from the second filter material area (21) by means of a sealing body (14).

9. The ringfilter (1) according to any of the previously mentioned claims, **characterized in that** the filter material (13) includes a first (22) and a second filter material areas (23), which are disposed circumferentially in the ring-shaped filter basket (12) such that the ringfilter (1) is configured as a double filter.

10. The ringfilter (1) according to claim 10, **characterized in that** at least one sealing body (14) is provided between the filter material areas (22, 23) and has the purpose of fluidically separating the filter material areas (22) from each other.

## Revendications

1. Filtre annulaire (1), lequel s'étend de façon annulaire autour d'un axe central (10) et est aménagé pour l'agencement dans une réception (11) en forme de perçage, comportant :
un panier filtrant (12), qui forme la structure de base du filtre annulaire (1) et s'étend de façon annulaire autour d'un axe central (10),
un matériau filtrant (13) lequel est accommodé dans le panier filtrant (12) et sert au filtrage d'un médium s'écoulant à travers le matériau filtrant (13),
le panier filtrant (12) présentant au moins un corps d'étanchéité (14) aménagé en une pièce avec le panier filtrant (12), lequel est aménagé pour étanchéifier au moins une région fluidique (15) du panier filtrant (12) envers la réception (11), le corps d'étanchéité (14) formant une épaule d'étanchéité (16) courbée radialement vers l'extérieur pour parvenir en contact de façon étanche contre la paroi (11a) de la réception (11), **caractérisé en ce que** le panier filtrant (12) présente au moins une conformation (17) en forme de col, sur laquelle l'épaule d'étanchéité (16) est moins partiellement agencée, la conformation (17) en forme de col étant aménagée de façon élastique de sorte qu'elle peut débattre vers l'intérieur lorsque le filtre annulaire (1) est introduit dans la réception (11).

2. Filtre annulaire (1) selon la revendication 1, **caractérisé en ce que** le panier filtrant (12) et le corps d'étanchéité (14) sont fabriqués dans une étape de fabrication commune, tout particulièrement dans une étape de moulage par injection commune et présentent une matière homogène.

3. Filtre annulaire (1) selon la revendication 1, **caractérisé en ce que** le panier filtrant (12) est fabriqué en une première étape de moulage par injection et ledit au moins un corps d'étanchéité (14) est surmoulé par injection au panier filtrant (12) dans une autre étape de moulage par injection.

4. Filtre annulaire (1) selon l'une des revendications mentionnées ci-avant, **caractérisé en ce que** le corps d'étanchéité (14) présente une rainure annulaire (18) de sorte qu'une région en contre-dépouille par la rainure annulaire (18) forme une lèvre annulaire (28) qui sert au contact étanchéifiant contre la paroi (11a) de la réception (11).

5. Filtre annulaire (1) selon la revendication 5, **caractérisé en ce que** la lèvre (19) annulaire présente une déformation orientée vers l'extérieur.

6. Filtre annulaire (1) selon l'une des revendications mentionnées ci-avant, **caractérisé en ce que** ledit au moins un corps d'étanchéité (14) forme un col d'étanchéité orienté radialement vers l'extérieur avec une rampe de montage (19), qui présente une inclinaison (24) inclinée de telle façon vers l'axe central qu'elle soutient l'addition du filtre annulaire (1) dans la réception (11).

7. Filtre annulaire (1) selon l'une des revendications mentionnées ci-avant, **caractérisé en ce que** le matériau filtrant (13) présente une première région de matériau filtrant (20) agencée sur la circonférence du panier filtrant (12) annulaire et une deuxième région de matériau filtrant (21) agencé du côté plan du panier filtrant (12).

8. Filtre annulaire (1) selon la revendication 8, **caractérisé en ce que** la première région de matériau filtrant (20) est séparée par fluide de la deuxième région de matériau filtrant (21).

9. Filtre annulaire (1) selon l'une des revendications mentionnées ci-avant, **caractérisé en ce que** le matériau filtrant (13) présente une première région de matériau filtrant (22) et une deuxième région de matériau filtrant (23) agencées sur la circonférence dans le panier filtrant (12) de sorte que le filtre annulaire (1) est aménagé comme filtre double.

10. Filtre annulaire (1) selon la revendication 10, **caractérisée en ce qu**'au moins un corps d'étanchéité (14) est prévu entre les régions de matériau filtrant (22, 23) pour séparer par fluide les régions de matériau filtrant (22) l'une de l'autre.
